# EUROPEAN PATENT APPLICATION

(11) **EP 4 271 048 A1**
(43) Date of publication of application: **01.11.2023**
(21) Application number: 22170276.4
(22) Date of filing: 27.04.2022
(51) Int. Cl.: H04W 48/18

(54) **DYNAMIC NETWORK SLICE DEPLOYMENT**

(71) Applicant: Vodafone GmbH, 40549 Düsseldorf (DE)
(72) Inventor: Friedrich, Robin, 45721 Haltern am See (DE); Lu, Yang, 40489 Düsseldorf (DE); Wild, Peter, 47807 Krefeld (DE); Kulakov, Alexey, 40595 Düsseldorf (DE)
(74) Representative: Weisbrodt, Bernd

(57) **Abstract**

The present solution provides a method performed by a user equipment, UE (1), in a wireless communication network, the method comprising: transmitting (S1) a first message representing a registration request message to the communication network, especially via a node (2, 5, 6) of the communication network; receiving (S1) a second message from the communication network, wherein the second message includes a list comprising at least one Network Slice Selection Assistance Information, NSSAI, group information of or at least one value corresponding to NSSAI identifying a network slice the UE (1) is allowed to use; storing (S2) the list; receiving (S3), from a node (2) of the communication network, a broadcast message including information indicating either the NSSAI group information or a value corresponding to NSSAI identifying a network slice received in the list the UE (1) is allowed to use, comparing (S4) the list and the information included in the broadcast message; and determining (S4), based on a result of the comparison, at least one NSSAI identifying a network slice the UE (1) is allowed to use.

## Description

The present solution concerns the dynamic deployment of network slicing in wireless communication network, particularly 5G/New Radio (NR) wireless communication networks.

According to current 3GPP specifications, especially TS 23.501, TS 23,502 and TS 24.501, Single-Network Slice Selection Assistance Information (S-NSSAI) is used to identify network slices. An S-NSSAI comprises a Slice/Service Type (SST) corresponding to an expected Network Slice behavior in terms of features and services and a Slice Differentiator (SD) representing an optional information that is complementing the SST(s) for differentiation amongst multiple network slices of the same SST.

Based on an operator's operational or deployment needs, a network slice instance can be associated with one or more S-NSSAIs, wherein an S-NSSAI can also be associated with one or more network slice instances. Especially according to TS 23.501 multiple network slice instances associated with the same S-NSSAI may be deployed in the same or in different Tracking Areas (TAs). Accordingly, an S-NSSAI allowed to be used by a UE is always assigned at a TA(s) basis as of today.

A Tracking Area (TA) is a logical grouping of cells in Long Term Evolution (LTE) and in 5G/NR networks and manages and represents the location of User Equipment (UE). One of the well-known performance considerations is the signaling overhead of a TA update versus that for paging. It is very common that TAs are statically configured, and a dynamic configuration of TAs are extremely costly.

There may be a scenario in which a TA covers a large geographic area comprising a plurality of Next Generation (i.e. 5G/NR) - Radio Access Networks (NG-RANs). Each of these NG-RANs may have a different service requirement to fulfill, e.g. regarding end-to-end (E2E) delay, capabilities etc. Since especially according to TS 23.501 a same S-NSSAI may be deployed in the same or in different TA, it is currently not possible to assign an individual S-NSSAI to each NG-RAN.

According to current implementations, when a user equipment (UE) in a particular TA initiates a registration procedure towards the network, the network will send the UE a list comprising up to eight S-NSSAIs for that particular TA. After receiving this list, the UE locally stores the same. Hence, the S-NSSAIs provided to the UE are valid and can be used in a particular TA, which may e.g. contain a plurality of NG-RANs, meaning a same list for all of the NG-RANs. Accordingly, the UE is not aware of which specific S-NSSAI can be used in which NG-RAN, as the respective NG-RAN might want.

In view of this, it is desirable that each of the NG-RANs can have an own network slice (corresponding to an S-NSSAI) configured with different service and quality characteristics.

Addressing this problem, the present invention suggests, according to a first embodiment, a method performed by a user equipment (UE) in a wireless communication network is provided, the method comprising: transmitting, a first message representing a registration request message to the communication network, especially via a node of the communication network,; receiving a second message from the communication network, wherein the second message includes a list comprising at least one Network Slice Selection Assistance Information, NSSAI, group information of or at least one value corresponding to NSSAI identifying a network slice the UE is allowed to use; storing the list; receiving, from a node of the communication network, a broadcast message including information indicating either the NSSAI group information or a value corresponding to NSSAI identifying a network slice received in the list the UE is allowed to use, comparing the list and the information included in the broadcast message; and determining, based on a result of the comparison, at least one NSSAI identifying a network slice the UE is allowed to use.

After that the UE advantageously requests a service from the network using the determined NSSAI. The method of the present invention further comprising requesting by the UE a service from the network using the determined NSSAI.

The idea of the claimed solution is that the list, e.g. NSSAIs={1. S-NSSAI#1, 2. S-NSSAI#2, ... , 8. S-NSSAI#8}, which is received by the UE from the core network, can currently only be updated when a next registration request procedure is initiated by the UE. Accordingly, the network cannot proactively update the list.

In the aforedescribed case of a TA that covers a large geographic area comprising a plurality of NG-RANs, a UE initiates a new registration request procedure regularly, e.g. every 54 minutes, by default. However, with the claimed solution, it is possible to enable a dynamic deployment of network slicing due to the comparatively short time period of the NG-RAN sending broadcast information, which is in the range of several hundred milliseconds.

According to a further embodiment of the present invention the list includes a priority of the network slice to be used, wherein the priority of the list is advantageously a position of the list.

A further embodiment of the present invention suggests, that the second message is a registration accept message, a tracking area accept message, or any respectively a NAS message providing network slice related information.

A further embodiment of the present invention advantageously suggests, that the information included in the broadcast message is indicated using a bitmap of bits, wherein each bit either identifies a network slice grouping or the value corresponding to the NSSAI, wherein the order of the bitmap preferably indicates the priority of the network slice to be used by the UE.

According to a preferred embodiment, receiving the broadcast message comprises: comparing a token pre-stored by the UE with a token comprised in the broadcast message; and if said tokens do not match, discarding the information included in the broadcast message; if said tokens match, performing the comparing of the list and the information included in the broadcast message to identify a network slice the UE is allowed to use. In this way, the UE can unambiguously identify whether or not the information received in the broadcast message is trustful. The list of NSSAI, e.g. {1. S-NSSAI#1, 2. S-NSSAI#2, ..., 8. S-NSSAI#8}, in the registration accept message is anyhow trustful due to the security protection provided by the core network, i.e. by the Access and Mobility Management Function (AMF), to the UE.

Such solution is particularly advantageous since broadcast information in NG-RANs is not security protected by default. Hence, if a "faked" base station/node maliciously broadcasts a wrong or manipulated information in a broadcast message, this will lead to the UE being not able to correctly use the network slicing.

Advantageously, the token is part of the information comprised in the broadcast message. More specifically, the information included in the broadcast message, e.g. {1. S-NSSAI#1, 2. S-NSSAI#2, ..., 8. S-NSSAI#8}, can be extended by adding said token, which is pre-defined and only known by the core network and the NG-RAN.

According to another preferred embodiment, the list and/or the information included in the broadcast message may contain up to eight values, preferably up to sixteen values. This may be advantageously achieved by representing the list and/or the information in the broadcast message by a bitmap, particularly a bitmap comprising eight bits. Accordingly, instead of providing a whole list of S-NSSAIs, wherein each S-NSSAI has 24 bits, a respective bit in the bitmap indicates whether a certain S-NSSAI can be used (bit set to 1) or not (bit set to 0). This will save radio resources and allow a more efficient signaling. In this regard, the NG-RAN does not need to understand the semantic of the S-NSSAIs because the respective S-NSSAI is encoded with a combination of ST and network slice descriptor. According to a particularly preferred embodiment, a priority of the S-NSSAI(s) to be used by the UE is provided by the order of bits in the bitmap.

In a further preferred embodiment of the claimed solution, the information respectively at least one value corresponding to the NSSAI included in the list identify network slices the UE is allowed to use in an area served by a first NG-RAN in a particular TA, and the information respectively at least one value corresponding to the NSSAI included in the broadcast message identifies a network slice the UE is allowed to use in an area served by a second NG-RAN in the same TA. Accordingly, while still being in a same TA, the UE is made aware of which S-NSSAI(s) is/are going to be permitted by the respective NG-RAN to be used.

According to a second embodiment of the present invention, a UE for use in a wireless communication network is provided, wherein the UE is configured to perform any of the aforedescribed method steps.

According to a third embodiment of the present invention, a method performed by a node in a wireless communication network is provided, the method comprising: receiving, from a user equipment (UE), a first message representing a registration request message; transmitting, to the UE, a second message, wherein the second message includes a list comprising at least one Network Slice Selection Assistance Information, NSSAI, group information of or at least one value corresponding to NSSAI identifying a network slice the UE is allowed to use; and transmitting, a broadcast message including information indicating either the NSSAI group information or a value corresponding to NSSAI identifying a network slice received in the list the UE is allowed to use.

Advantageously the list includes a priority of the network slice to be used, wherein the priority of the list is advantageously a position of the list.

Advantageously the second message is a registration accept message, a tracking area accept message, or any respectively a NAS message providing network slice related information.

Advantageously the information included in the broadcast message is indicated using a bitmap of bits, wherein each bit either identifies a network slice grouping or the value corresponding to the NSSAI, wherein the order of the bitmap preferably indicates the priority of the network slice to be used by the UE.

Advantageously, the broadcast message comprises a token, which allows the UE to perform a comparison with a token pre-stored by the UE.

According to a preferred embodiment, the token is part of the information included in the broadcast message.

According to another preferred embodiment, the list and/or the information included in the broadcast message may contain up to eight values. Preferably, the list and/or the information included in the broadcast message are represented by a bitmap, particularly a bitmap comprising eight bits. According to a particularly preferred embodiment, a priority of the S-NSSAI(s) to be used by the UE is provided by the order of bits in the bitmap.

In a further preferred embodiment of the claimed solution, the information respectively at least one value corresponding to the NSSAI included in the list identify network slices the UE is allowed to use in an area served by a first NG-RAN in a particular TA, and the information respectively at least one value corresponding to the NSSAI included in the broadcast message identifies a network slice the UE is allowed to use in an area served by a second NG-RAN in the same TA.

According to a second embodiment of the present invention, a node for use in a wireless communication network is provided, wherein the node is configured to perform any of the aforedescribed method steps.

Further details, features and advantages of the presented solution are explained in more detail below with reference to the embodiments shown in the figures of the drawings.

Therein:
- Fig. 1: represents a schematic overview of a UE arranged in a tracking area comprising a plurality of NG-RANs extending along a traffic route;
- Fig. 2: represents a flow chart of a method for dynamic deployment of network slicing in wireless communication network; and
- Fig. 3: represents an exemplary embodiment of broadcasting positions of NSSAI identifiers on a per cell basis.

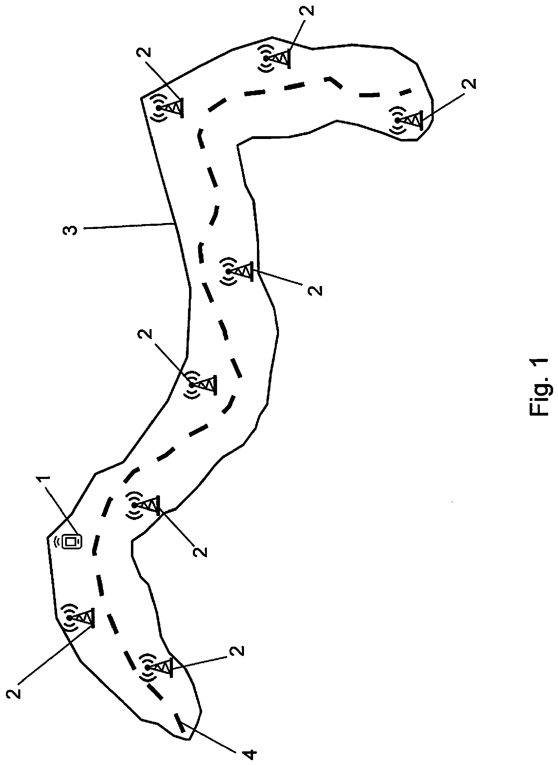

According to Fig. 1, a UE 1 may be arranged in a TA 3, which comprises a plurality of nodes 2, each node representing a different NG-RAN. The TA3 may extend along an existing traffic route 4 such as a railroad, a highway, a shipping route, or the like.

For example, the geographic area illustrated in Fig. 1 may extend 10km in east-west-direction and 100m in the north-south-direction from the traffic route. As an illustrative example, the TA 3 comprises eight NG-RANs represented by nodes 2. In the present case, each of these NG-RANs has a different service requirement to fulfill, for instance regarding end-to-end (E2E) delay, a certain capability etc.

Accordingly, it is desirable that each of the NG-RANs can have an own network slice (represented by an S-NSSAI) configured with different service and quality characteristics.

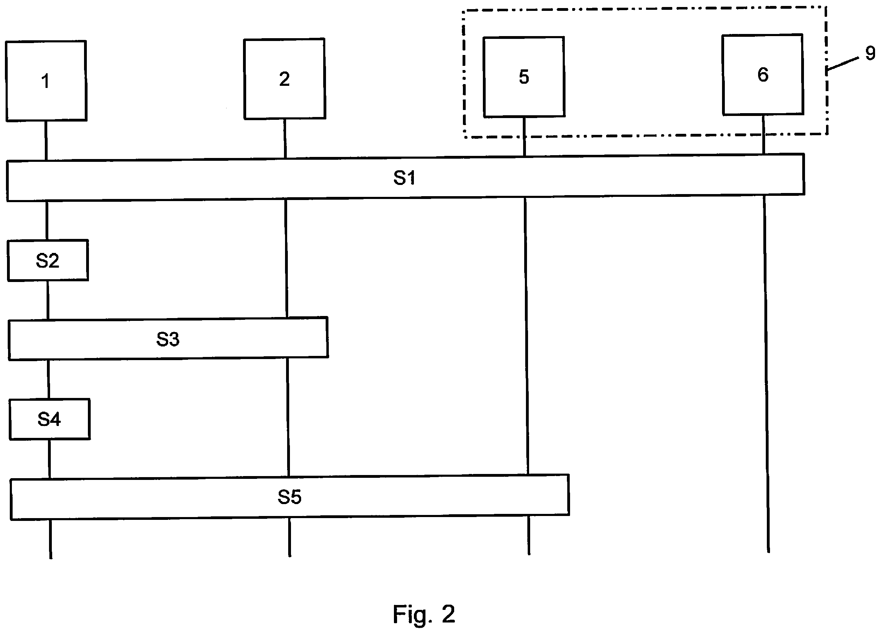

Fig. 2 represents a flow chart of a method for dynamic deployment of network slicing in wireless communication network according to the claimed solution.

In Fig. 2 the interworking between a UE 1 and several network components of the communication network is illustrated, wherein said network components comprise a base station/a node 2 in the Radio Access Network as well as for example components 5 and 6 in the Core Network 9. The component 5 might for example comprise at least one of an Access and Mobility Management Function (AMF), Session Management Function (SMF) and a User Plane Function (UPF). Further, the component 6 might for example comprise a Unified Data Manager.

In a first method step S1, the UE 1 registers toward the network and receives a second message containing a list of S-NSSAIs. In detail, the UE transmits, to the node 2, a registration request message and receives, especially from the node 5 respectively 6 via node 2, e.g. an registration accept message. Said registration accept message includes a list comprising group information of or at least one, preferably a plurality of values corresponding to NSSAI for identifying a network slice the UE 1 is allowed to use. In method step S1, the components 5 and 6 of the Core Network may be involved as well, wherein the corresponding steps are not described in more detail as being defined in corresponding 3GPP standards available to the skilled person, such as TS 23.501, TS 23.502 and TS 24.501, the contents of which are incorporated herein by reference.

Subsequently, in a second method step S2, the UE 1 locally stores the list. In detail, said list comprised in the registration accept message including allowed NSSAIs for a particular TA 3, and may comprise the content {1. S-NSSAI#1, 2. S-NSSAI#2, ..., 8. S-NSSAI#8}. At this time, the UE 1 is aware of the fact that the list has only a validity within the particular TA 3 for instance.

In a third method step S3, the UE 1 receives, from the node 2, a broadcast message, wherein the broadcast message includes at least one value corresponding to NSSAI identifying a network slice the UE 1 is allowed to use. The broadcast may be configured by an Operations Support System (OSS) of the network.

Therein, a bitmap of eight bits or a number of n of up to 8 bits may be broadcast instead of the whole list of S-NSSAIs (wherein each S-NSSAI has 24 bits), which will save radio resources in the downlink.

After that, in a fourth method step S4, the list and the information included in the broadcast message are compared to each other and based on a result of the comparison, at least one NSSAI identifying a network slice the UE 1 is allowed to use is determined.

Advantageously, a further embodiment of the present invention provides, that the comparison is only carried out after it has been determined by the UE 1 that a token comprised in the broadcast message matches a token pre-stored by the UE 1. However, if said tokens do not match, the information included in the broadcast message is discarded.

In method step S5, the UE 1 requests a service from the network using the determined NSSAI.

Considering the scenario according to Fig. 1, the plurality of values corresponding to the NSSAI included in the list (received in step S1) identify network slices the UE 1 is allowed to use in an area served by a first NG-RAN represented by a node 2 in a particular TA 3, and the at least one value corresponding to the NSSAI included in the broadcast message (received in step S3) identifies a network slice the UE 1 is allowed to use in an area served by a second NG-RAN represented by a node 2 in the same TA 3.

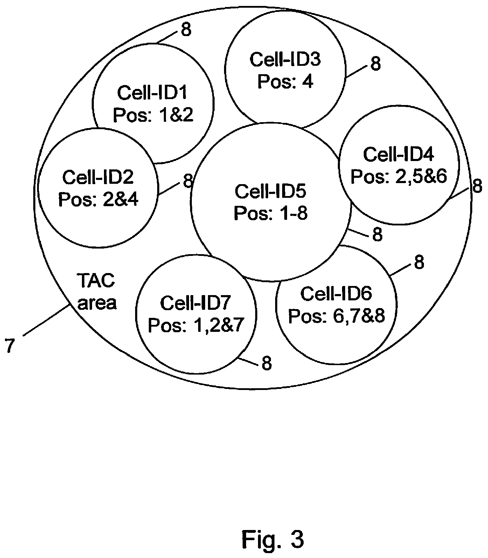

Fig. 3 represents an exemplary embodiment of broadcasting positions of NSSAI identifiers on a per cell basis. According to Fig. 3, a tracking area may be defined by a Tracking Area Code (TAC) and hence, will be referred to as TAC area 7. Inside said TAC area 7, a plurality of cells 8 may be given. Each of these cells 8 broadcasts, using a node such as a gNB in each of the respective cells, the respective values, such as 1 & 2 for the cell with Cell-ID 1 or 2, 5 & 6 for the cell with Cell-ID 4. The values indicate to a UE, which is located in the respective cell, which network slice(s) may be used by the same. Therein, a value of 6, for example, may refer to the sixth entry of a list or bitmap comprising a plurality of NSSAIs and pertains e.g. to a particular NSSAI.

The present invention provides the advantage that a list of NSSAIs received by the UE 1 from the core network cannot only be updated when a next registration request procedure is initiated by the UE 1, e.g. every 54 minutes according to a default setting. It is rather the case that the list is dynamically and proactively updated and hence, a dynamic deployment of network slicings is enabled due to enabling NG-RANs sending the broadcast information in shorter time periods, e.g. in an order of several hundred milliseconds.

The impact on existing entities is comparatively low since the NG-RAN has to be only updated to include the new broadcast information to enable a dynamic S-NSSAI(s) allocation at a NG-RAN cell level. Further, the UE 1 needs to be only updated to be able to decode the new broadcast information. Finally, the operations & maintenance system needs to be updated to ensure the synchronization of the order between the list of S-NSSAIs sent by the core network and the list being broadcast by the NG-RAN when the list is being updated by the core network.

The embodiments shown in the figures of the drawing and the embodiments explained in connection therewith serve only to explain the presented solution and are not limiting for the same.

### Reference signs:

- 1: User equipment
- 2: Access network entity (e.g. Node/Base Station)
- 3: Tracking Area
- 4: Railroad, highway, shipping route, etc.
- 5: Core network entity (e.g. Access and Mobility Management Function, Session Management Function, User Plane Function)
- 6: Core network entity (e.g. Unified Data Management)
- 7: TAC (Tracking Area Code) area
- 8: Cell
- 9: Core network/core network entities
- S1: Method step
- S2: Method step
- S3: Method step
- \S4: Method step
- S5: Method step

## Claims

1. A method performed by a user equipment, UE (1), in a wireless communication network, the method comprising:
transmitting (S1) a first message representing a registration request message to the communication network, especially via a node (2, 5, 6) of the communication network;
receiving (S1) a second message from the communication network, wherein the second message includes a list comprising at least one Network Slice Selection Assistance Information, NSSAI, group information of or at least one value corresponding to NSSAI identifying a network slice the UE (1) is allowed to use;
storing (S2) the list;
receiving (S3), from a node (2) of the communication network, a broadcast message including information indicating either the NSSAI group information or a value corresponding to NSSAI identifying a network slice received in the list the UE (1) is allowed to use,
comparing (S4) the list and the information included in the broadcast message; and
determining (S4), based on a result of the comparison, at least one NSSAI identifying a network slice the UE (1) is allowed to use.

2. The method of claim 1, comprising requesting (S5) by the UE (1) a service from the network using the determined NSSAI.

3. The method of claim 1 or claim 2, wherein the list includes a priority of the network slice to be used, wherein the priority of the list is advantageously a position of the list.

4. The method according to any one of the claims 1 to 3, wherein the second message is a registration accept message, a tracking area accept message, or a NAS message providing network slice related information.

5. The method according to any one of claims 1 to 4, wherein the information included in the broadcast message is indicated using a bitmap of bits, wherein each bit either identifies a network slice grouping or the value corresponding to the NSSAI, wherein the order of the bitmap preferably indicates the priority of the network slice to be used by the UE (1).

6. The method according to any one of claims 1 to 5, wherein receiving (S3) the broadcast message comprises:
comparing a token pre-stored by the UE (1) with a token comprised in the broadcast message; and
if said tokens do not match, discarding the information included in the broadcast message;
if said tokens match, performing the comparing of the list and the information included in the broadcast message to determine at least one NSSAI identifying a network slice the UE (1) is allowed to use.

7. The method according to any one of claims 1 to 6, wherein the information respectively at least one value corresponding to the NSSAI included in the list identify network slices the UE (1) is allowed to use in an area served by a first Next Generation-Radio Access Network, NG-RAN, in a particular tracking area, TA (3), and wherein the information respectively at least one value included in the broadcast message identifies a network slice the UE (1) is allowed to use in an area served by a second NG-RAN in the same TA (3).

8. A user equipment, UE (1), for use in a wireless communication network, wherein the UE (1) is configured to perform a method according to any one of claims 1 to 7.

9. A method performed by a node (2, 5, 6) in a wireless communication network, the method comprising:
receiving (S1), from a user equipment, UE (1), a first message representing a registration request message;
transmitting (S1), to the UE (1), a second message, wherein the second message includes a list comprising at least one Network Slice Selection Assistance Information, NSSAI, group information of or at least one value corresponding to NSSAI identifying a network slice the UE (1) is allowed to use; and
transmitting (S3), a broadcast message including information indicating either the NSSAI group information or a value corresponding to NSSAI identifying a network slice received in the list the UE (1) is allowed to use.

10. The method according to claim 9, wherein the list includes a priority of the network slice to be used, wherein the priority of the list is advantageously a position of the list.

11. The method according to claim 9 or claim 10, wherein the second message is a registration accept message, a tracking area accept message, or a NAS message providing network slice related information.

12. The method according to any one of claims 9 to 11, wherein the information included in the broadcast message is indicated using a bitmap of bits, wherein each bit either identifies a network slice grouping or the value corresponding to the NSSAI, wherein the order of the bitmap preferably indicates the priority of the network slice to be used by the UE (1).

13. The method according to any one of claims 9 to 12, wherein the broadcast message comprises a token, which allows the UE (1) to perform a comparison with a token pre-stored in the UE (1).

14. The method according to any one of claims 9 to 13, wherein the information respectively at least one value corresponding to the NSSAI included in the list identify network slices the UE (1) is allowed to use in an area served by a first Next Generation-Radio Access Network, NG-RAN, in a particular tracking area, TA (3), and wherein the information respectively at least one value included in the broadcast message identifies a network slice the UE (1) is allowed to use in an area served by a second NG-RAN in the same TA (3).

15. A node (2, 5, 6) for use in a wireless communication network, wherein the node (2) is configured to perform a method according to any one of claims 9 to 14.
